(19) Europäisches Patentamt

European Patent Office

Office européen des brevets

(11) **EP 4 718 279 A1**

(12) **EUROPEAN PATENT APPLICATION**

(43) Date of publication:
**01.04.2026  Bulletin 2026/14**

(21) Application number: **25192887.5**

(22) Date of filing: **30.07.2025**

(51) International Patent Classification (IPC):
*G06F 16/334* (2025.01)

(52) Cooperative Patent Classification (CPC):
**G06F 16/3344; G06F 16/3347**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024  US 202418902652**

(71) Applicant: **Intuit Inc.**
**Mountain View, CA 94043 (US)**

(72) Inventors:
• **Balakrishnan, Jeyendran**
**Mountain View, CA, 94043 (US)**
• **Kallur Palli Kumar, Sricharan**
**Mountain View, CA, 94043 (US)**
• **Hasson, Hilaf**
**Mountain View, CA, 94043 (US)**

(74) Representative: **D Young & Co LLP**
**3 Noble Street**
**London EC2V 7BQ (GB)**

(54) **SUPERVISED TEXT RETRIEVAL**

(57)    A text retrieval system is configured to use an embedding model that is pretrained on generic selection of text, but that can be specifically trained for specific text retrieval tasks. The text retrieval system includes a query embedding transformation model that is trained to transform a baseline query embedding generated by the embedding model into a modified query embedding based on a distance between the baseline query embedding and training query embeddings. The query embedding transformation model is configured so that as the distance between baseline query embeddings and the training query embedding decreases, the resulting modified query embeddings are less distant to the training text embedding. A searcher performs a nearest neighbor searches of a text embedding index using the modified query embeddings to determine the nearest matching text(s), which include the training texts, and retrieves the nearest matching texts from a corpus.

FIG. 1

EP 4 718 279 A1

**Description**

**CROSS-REFERENCE TO RELATED APPLICATIONS**

This Patent Application claims priority to U.S. Patent Application No. 18/902,652 entitled "SUPERVISED TEXT RETRIEVAL" and filed on September 30, 2024, which is assigned to the assignee hereof. The disclosures of all prior Applications are considered part of and are incorporated by reference in this Patent Application.

**BACKGROUND**

Information retrieval is the task of identifying and retrieving information system resources that are relevant to an information need. Text Retrieval is a subset of information retrieval where the units of information to be retrieved are textual in nature, such as documents, articles, text snippets and sentences. The collection of textual items that are available for text retrieval is called a corpus. The information needs of the user of a text retrieval system is expressed in the form of text, which is typically short, and is termed the user query. Text retrieval finds application in a wide variety of applications, including traditional applications such as search engines and recommendation systems, as well as applications such as Retrieval Augmented Generation (RAG) for Large Language Models (LLMs).

Classical techniques for text retrieval that are based on vector space methods, such as Term Frequency-Inverse Document Frequency (TF-IDF) and its industry standard BM25 incarnation, suffer from shortcomings such as the inability to understand semantics, particularly different ways of expressing the same meaning via text queries, and sensitivity to spelling mistakes, abbreviations, colloquialisms, etc. Modern text retrieval systems use machine-learned language models, e.g., based on deep learning architectures that are sometimes referred to as embedding models, to convert text into numeric vector representations called embeddings, and use algorithms, such as nearest neighbor search algorithms, to search for the closest matching corpus text embeddings to the embeddings of the input text queries. The modern text retrieval systems using embedding models deliver improved semantic matches and are more robust to non-standard textual content.

The typical method to develop embedding models is to collect a large number of examples of mapping text queries and the most relevant texts for the retrieval task of interest, and use this to train the embedding models. However, there is significant cost, time and effort involved, both to collect the training examples and to carefully train the embedding model. Consequently, industry practice is to select a suitable off-the-shelf pre-trained embedding model that has been trained on a large number of training samples covering a generic selection of text retrieval tasks, and directly use the model for the specific text retrieval task. While being significantly less expensive and faster to implement, this approach suffers from an inability to be optimized for the specific text retrieval problem of interest. For example, when some task-specific "training" information is available, e.g., in the form of matching query-text pairs, an off-the-shelf pretrained embedding model is generally unable to leverage utilize the task-specific training information to improve its retrieval performance. It would be desirable to develop a text retrieval system that may leverage a chosen baseline embedding model in a scalable manner with respect to the available number of task-specific training examples.

**SUMMARY**

Particular aspects are set out in the appended independent claims. Various optional embodiments are set out in the dependent claims.

This Summary is provided to introduce in a simplified form a selection of concepts that are further described below in the Detailed Description. This Summary is not intended to identify key features or essential features of the claimed subject matter, nor is it intended to limit the scope of the claimed subject matter. Moreover, the systems, methods, and devices of this disclosure each have several innovative aspects, no single one of which is solely responsible for the desirable attributes disclosed herein.

A text retrieval system is configured to use an embedding model that is pretrained on generic selection of text, but that can be specifically trained for specific text retrieval tasks using a labeled retrieval dataset including training queries and corresponding training texts. The text retrieval system includes a query embedding transformation model that is trained to transform a baseline query embedding generated by the embedding model in response to a query into a modified query embedding. The baseline query embedding is transformed into the modified query embedding based on a distance between the baseline query embedding and training query embeddings. The query embedding transformation model is configured so that as the distance between baseline query embeddings and the training query embedding decreases, the resulting modified query embeddings are less distant to the training text embedding. The text retrieval system includes a searcher that performs a nearest neighbor search of a text embedding index using the modified query embeddings to determine the nearest matching text(s), and retrieves the nearest matching texts from a corpus.

One innovative aspect of the subject matter described in this disclosure can be implemented as a server computer that is configured for embedding based text retrieval. The server computer includes one or more processors, one or more databases communicatively coupled with the one or more processors, and a memory communicatively coupled with the one or more processors and storing instructions that, when executed by the one or more processors, configures the one or more processors. The one or more processors may be configured as an encoder including an embedding model that converts text from a corpus into corpus text embeddings that are stored as text embeddings in a text embedding index in the one or more databases, and converts text from queries into baseline query embeddings. The one or more processors may be further configured as a query embedding transformation model that transforms the baseline query embeddings from the embedding model into modified query embeddings. The query embedding transformation model is trained based on a labeled retrieval dataset including training queries and corresponding training texts. The embedding model converts the training queries to training query embeddings that are stored in a training query embedding index in the one or more databases and the training texts are added to the corpus and are converted into training text embeddings by the embedding model and are stored as the text embeddings in the text embedding index in the one or more databases. The query embedding transformation model is trained to transform the baseline query embeddings into the modified query embeddings based on a distance between the baseline query embeddings and the training query embeddings. The one or more processors may be configured as a searcher that is configured to perform a nearest neighbor search that searches the text embedding index based on the modified query embeddings to produce one or more texts from the corpus.

One innovative aspect of the subject matter described in this disclosure can be implemented as a method for training a text retrieval system for embedding based retrieval of text. The method for training includes encoding text from a corpus into corpus text embeddings with an embedding model that is pretrained, wherein the embedding model converts text from user queries into baseline query embeddings. The method further includes receiving a labeled retrieval dataset including training queries and corresponding training texts. The training texts are added in the corpus. The training queries are encoded into training query embeddings and the training texts into training text embeddings. The training query embeddings are stored in a training query embedding index. Additionally, the corpus text embeddings and the training text embeddings are stored as text embeddings in a text embedding index. The method further includes training a query embedding transformation model using the labeled retrieval dataset to transform the baseline query embeddings produced by the embedding model into modified query embeddings based on a distance between the baseline query embeddings and the training query embeddings.

One innovative aspect of the subject matter described in this disclosure can be implemented as a method for embedding based retrieval of text with a text retrieval system. The method includes receiving a user query via an electronic interface and encoding the user query into a baseline query embedding with an embedding model, where the embedding model encodes text from a corpus into corpus text embeddings and the corpus text embeddings are stored as text embeddings in a text embedding index. The method further includes transforming the baseline query embedding to a modified query embedding with a query embedding transformation model. The query embedding transformation model is trained based on a labeled retrieval dataset including training queries and corresponding training texts, where the embedding model converts the training queries to training query embeddings that are stored in a training query embedding index. The training texts are added to the corpus and are converted into training text embeddings by the embedding model and are stored as the text embeddings in the text embedding index. The query embedding transformation model transforms the baseline query embeddings into the modified query embeddings based on a distance between the baseline query embeddings and the training query embeddings. The method further includes retrieving one or more texts from the corpus based on a nearest neighbor search of the text embeddings in the text embedding index using the modified query embedding, and providing the one or more texts and the user query to a prompt constructor for a Large Language Model (LLM) in a Retrieval Augmented Generation application that produces a prompt to the LLM that integrates the one or more retrieved texts and the user query.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

## BRIEF DESCRIPTION OF THE DRAWINGS

FIG. 1 illustrates a schematic block diagram of a system, including a server computer configured for embedding based text retrieval within which various aspects of the subject matter disclosed herein can be implemented.

FIG. 2 illustrates an example architecture of a text retrieval process within which various aspects of the subject matter disclosed herein can be implemented.

FIG. 3 illustrates an example architecture of a Retrieval Augmented Generation (RAG) application for a Large Language Model (LLM) with a text retrieval system within which various aspects of the subject matter disclosed herein can be implemented.

FIG. 4 illustrates a text retrieval system that performs conventional embedding based retrieval.

FIG. 5 illustrates a text retrieval system that is configured to perform embedding based retrieval in accordance with implementations of the present disclosure.

FIG. 6 illustrates a flowchart depicting an example method for training a text retrieval system, according to some implementations.

FIG. 7 illustrates a flowchart depicting an example method for embedding based retrieval by training a text retrieval system, according to some implementations.

Like reference numbers and designations in the various drawings indicate like elements.

## DETAILED DESCRIPTION

Implementations of the subject matter described in this disclosure allow for a text retrieval system that can leverage a chosen generic baseline embedding model in a scalable manner to perform specific text retrieval tasks. The baseline embedding model, for example, may be trained with a generic selection of text retrieval tasks, but as discussed herein, the text retrieval system may be optimized for specific text retrieval problems of interest. The text retrieval system, accordingly, may retain the baseline retrieval performance of the pretrained embedding model, but may be trained to improve task-specific retrieval performance based on the number and variety of task-specific training examples. Once trained for any given set of specific training examples, the text retrieval system responds to input queries by retrieving the training documents for input queries that are similar to corresponding specific training queries, and retrieving the baseline embedding model's output for input queries that are dissimilar to the specific training queries. Accordingly, the text retrieval system leverages the task-specific training information without sacrificing the general purpose language modeling capabilities of the baseline embedding model.

Text retrieval systems use embedding models to convert text into numeric vector representations, referred to as embeddings. A text corpus is converted to embeddings and are indexed. Input queries are similarly converted to embeddings, which are then used to search for a closest match with the indexed text embeddings to identify the text or texts to retrieve. Embedding models, however, are difficult and expensive to build, requiring a significant cost, time and effort involved, both to collect training examples and to carefully train the embedding model. Accordingly, industry practice is to select a suitable off-the-shelf pre-trained embedding model for text retrieval systems. The off-the-shelf pre-trained embedding model typically is trained on a large number of samples covering a generic selection of text retrieval tasks. The technical problem with such text retrieval systems is that the use of pre-trained embedding models results in text retrieval systems that are not optimized for, and may not be capable of specific text retrieval tasks, such as retrieving medical, scientific, accounting, or other specific types of information. For example, the relevant text for such specific text retrieval tasks may not be included in the text corpus. Moreover, even if the relevant text is added to the text corpus, the pre-trained embedding model is not trained with respect to such specific tasks, and accordingly, may not produce embeddings that enable retrieval of the relevant text in response to specific task related queries. Retraining the embedding model for the specific text retrieval tasks may be prohibitively expensive and time consuming.

Implementations of the subject matter described herein provide a technical solution for the above described technical problem by devising a new type of retriever model that uses a pre-trained embedding model and can retrieve relevant text in response to specific task related queries. The resulting text retrieval system may use the pretrained embedding model as a baseline embedding model that generates the embedding index for the text corpus and converts input queries into baseline query embeddings. The text retrieval system transforms the baseline query embeddings into modified query embeddings based on the distance between the baseline query embedding and specific task related queries, where the modified query embeddings will retrieve specific task related text in response to an input query that is close to a corresponding specific task related training query, or that will retrieve the same text as the unmodified baseline query embedding for input queries that are dissimilar to any specific task related training query. Additionally, the input query embeddings may be transformed into a modified query embedding that interpolates between these two retrieval results for input queries that are at an intermediate distance from training queries.

The text retrieval system may include a retriever model, for example, that is trained with a labeled retrieval dataset of specific task related examples, with each example including a training query that is paired with one or more training texts that has been judged to be the best matching text(s) for that training query. The retriever model may use an interpolation function to transform input query embeddings into the modified query embeddings based on the distance between the input query embeddings and the training query embeddings. In some implementations, the interpolation function may use smooth localized kernel functions that are centered at the locations of the training query embeddings. The parameters of the retriever model may be the embedding vectors of the training queries and corresponding training documents, as well as the smoothness scale parameter of the localized kernel functions. In some implementations, the interpolation function may use a multivariate Gaussian process model. The parameters of the Gaussian process model may be embedding vectors of the training queries and corresponding training documents, as well as a row correlation matrix that captures the correlation between different components of the query embedding vectors, and the smoothness scale parameter of the localized local kernel. All of the parameters of the retriever model may be determined during the training phase of the retriever model using the labeled task specific retrieval dataset. After training, the retriever model uses the learned interpolation function to transform input query embeddings produced by the baseline embedding model into the desired modified input query embeddings, with which the search may be performed. Accordingly, the resulting text retrieval system will perform as the pretrained unsupervised baseline embedding model when there are no specific training examples, and will smoothly scale towards the performance of a task specific, fully supervised text retrieval system as the number and coverage of specific training examples increases during training of the retriever model.

Aspects of the subject matter disclosed herein are not a mental process that can be performed in the human mind, for example, because the human mind is not practically capable of generating vector embeddings for text, or transforming baseline query embeddings into modified query embeddings based on a distance between the baseline query embeddings and training query embeddings. Moreover, the human mind is not equipped to practically search databases with a nearest neighbor search or vector search to find the closest data points to a given query point in a vector space. The human mind is similarly not equipped to practically store data in databases or retrieve data from databases. Additionally, the human mind is not practically capable training a query embedding transformation model of a text retrieval system using the labeled retrieval dataset as discussed herein. Moreover, various aspects of the present disclosure provide a technical solution to a technical problem that is rooted in computer technology, and specifically text retrieval systems. As discussed herein, text retrieval systems suffer from the technical problem that the use of generically trained embedding models results in text retrieval systems that are not optimized for, and may not be capable of specific text retrieval tasks, such as accurately retrieving medical, scientific, accounting, or other specific types of information. The technical solution provided by the present disclosure, such as the implementation of the query embedding transformation model that is trained to modify the baseline query embeddings enables text retrieval for specific tasks that extend beyond the capabilities of the generically trained embedding models, and that would otherwise require an expensive and time consuming retraining of the entire embedding model. Further, various aspects of the text retrieval system discussed herein are integrated into a practical application including improving the functioning of text retrieval systems and in some aspects improving the functioning of search applications, recommendation applications, or Large Language Model (LLM) and the functioning of Retrieval Augmented Generation (RAG) application for the LLM.

In the following description, numerous specific details are set forth such as examples of specific components, circuits, and processes to provide a thorough understanding of the present disclosure. The term "coupled" as used herein means connected directly to or connected through one or more intervening components or circuits. Also, in the following description and for purposes of explanation, specific nomenclature is set forth to provide a thorough understanding of the aspects of the disclosure. However, it will be apparent to one skilled in the art that these specific details may not be required to practice the example implementations. In other instances, well-known circuits and devices are shown in block diagram form to avoid obscuring the present disclosure. Some portions of the detailed descriptions which follow are presented in terms of procedures, logic blocks, processing, and other symbolic representations of operations on data bits within a computer memory.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example implementations, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

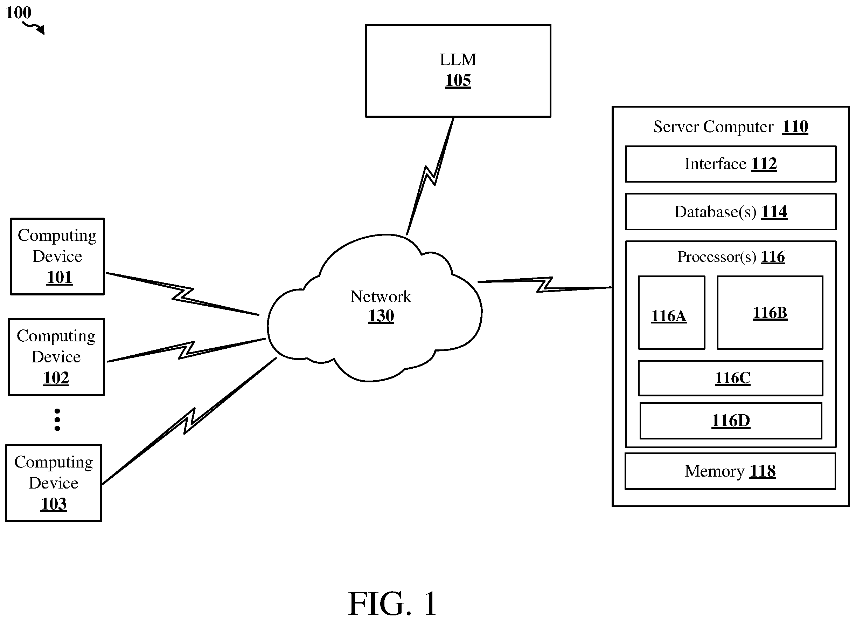

FIG. 1 shows an example network environment 100 within which aspects of the present disclosure can be implemented. In one or more implementations, one or more of the modules and elements shown in FIG. 1 may be omitted, repeated, and/or substituted. Accordingly, implementations should not be considered limited to the specific arrangements of modules shown in FIG. 1. Network environment 100 of FIG. 1 depicts the components of a text retrieval system that is configured to perform embedding based text retrieval in accordance with implementations disclosed herein.

The network environment 100 is shown to include multiple computing devices 101-103 of users, a server computer 110, an optional Large Language Model (LLM) 105, and a communications network 130. In particular, the communications network 130 may be the Internet, a wide area network, a local area network, WiFi network, or any other suitable wired or wireless network. Although only three computing devices 101-103 are shown in the example of FIG. 1, in other implementations, any suitable number of computing devices can access and communicate with the server computer 110 over the communications network 130. The entities associated with the computing devices 101-103, for example, may be users of the text retrieval system.

Each of the computing devices 101-103 can be any suitable wired or wireless computing device that can access and communicate with the server computer 110 over the communications network 130. The computing devices 101-103 for example, can be a desktop computer, laptop computer, tablet computer, personal digital assistant, cellular telephone, smartphone, electronic book reader, or other suitable device capable of communicating over the communications network. Although not shown in FIG. 1 for simplicity, each of the computing devices 101-103 includes at least a processor, a memory storing programs and other instructions that can be executed by the processor, and a user interface, e.g., one or more of a display screen, an audio interface, a keyboard, a mouse, etc., through which a respective user can access, communicate with, and interact with the server computer 110. For example, each of the computing devices 101-103 may further include an application (or browser) to electronically interface with the server computer 110 directly or indirectly, e.g., through another server computer, not shown, e.g., to provide an input query to the text retrieval system via the electronic interface and to receive via the electronic interface text or results from the text retrieval system, e.g., operating as a search engine or recommendation system, or from either the text retrieval system or LLM 105 if the text retrieval system is operating in a Retrieval Augmented Generation (RAG) application for the LLM 105.

The server computer 110 is shown to include an interface 112, one or more database(s) 114, one or more processors 116, and memory 118 coupled to the one or more processors 116. In some implementations, the various components of the server computer 110 may be interconnected by a data bus, which may be any known internal or external bus technology, including but not limited to ISA (Industry Standard Architecture), EISA (Extended Industry Standard Architecture), PCI (Peripheral Component Interconnect), PCI Express, NuBus, USB (Universal Serial Bus), Serial ATA (Serial Advanced Technology Attachment), or FireWire. In other implementations, the various components of the server computer 110 may be interconnected using other suitable signal routing resources, for example, the components may be distributed among multiple physical locations and coupled by a network connection.

The server computer 110 is configured for embedding based text retrieval, as discussed herein, which may be used for a search engine, recommendation system, or integrated into a RAG application for the LLM 105.

By way of example, the server computer 110 may configured to receive queries from computing devices 101-103 and to provide results to the computing devices 101-103 or to the LLM 105 through the communications network 130 via the electronic interface 112. The server computer 110 may be configured to receive queries from computing device 101-103 via the network 130 directly or indirectly through one or more intermediate computing devices or services, and to perform an embedding based search and retrieve text from one or more databases 114 in response. The server computer 110, for example, may be configured with a retriever that, as discussed herein, uses a pretrained embedding model to encode text from a corpus into text embeddings that are stored in one or more databases 114 and to encode queries received, e.g., from the computing device 101-103, into query embeddings. The retriever further includes a query embedding transformation model that is trained using labeled retrieval dataset that includes training queries and corresponding training texts, e.g., which may be related to specific tasks. The query embedding transformation model is trained to transform baseline query embeddings from the embedding model into modified query embeddings based on distances between the baseline query embeddings and training query embeddings stored in a training query embedding index stored in the one or more databases 114. As discussed herein, the query embedding transformation model is trained so that as the distance between the baseline query embeddings and a training query embedding decreases, the modified query embeddings are less distant to the training text embedding. The retriever further includes a searcher that is configured to perform a nearest neighbor search of the text embedding index stored in the one or more databases 114 based on the modified query embeddings, and to retrieve the closest matching texts from the corpus stored in the one or more databases 114. In some implementations, the text retrieval system performed by the server computer 110 may be integrated into an application, such as a search system, recommendation system, and the server computer 110 may be configured to provide through the electronic interface 112 the closest matching text to the computing device 101-103 via the network 130 directly or indirectly through one or more intermediate computing devices or services. In some implementations, the text retrieval system performed by the server computer 110 may be integrated into an application such as a Retrieval Augmented Generation (RAG) application, and the server computer 110 may be further configured to use the retrieved documents to generate an LLM prompt that integrates the user query and the retrieved documents, and to provide through the electronic interface 112 the LLM prompt to the LLM 105 via the network 130 directly or indirectly through one or more intermediate computing devices or services.

The interface 112 may include one or more input/output (I/O) interfaces to obtain administrator inputs, labeled retrieval datasets for training, etc. An example interface 112 may include a wired interface or wireless interface to the internet or other means to communicably couple with other devices. For example, the interface 112 may include an interface with an ethernet cable or a wireless interface to a modem, which is used to communicate with an internet service provider (ISP) directing traffic to and from other devices (if server computer 110 is remote). The interface 112 may further include a display, a speaker, a mouse, a keyboard, or other suitable input or output elements that allow interfacing between the server computer 110 and another entity, such as an administrator.

The one or more databases 114 may be used to store the text corpus, as well as a text embedding index and a training query embedding index. In some implementations, one or more databases 114 may be external to the server computer 110 and may be accessed through network 130.

The one or more processors 116 may include one or more suitable processors capable of executing scripts or instructions of one or more software programs stored in server computer 110 (such as within a computer-readable medium and in memory 118) and that once programmed pursuant to instructions stored in memory operates as a special purpose computer. For example, the one or more processors 116 may be capable of executing instructions causing the one or more processors 116 to perform embedding based retrieval of text, as discussed herein. The one or more processors 116 may include a single-chip or multi-chip processor, a single-chip or multi-chip graphics processing unit (GPU), a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. In one or more implementations, the one or more processors 116 may include a combination of computing devices (such as a combination of a DSP and a microprocessor, a combination of a GPU and a microprocessor, a plurality of microprocessors, one or more microprocessors in conjunction with a DSP core, one or more microprocessors in conjunction with GPU cores, or any other such configuration). In some implementations, particular processes and methods may be performed by circuitry that is specific to a given function.

The one or more processors 116 may be configured as a special purpose computer or may include hardware components to operate as processors to perform the various functions discussed herein. For example, the one or more processors 116 may be configured to operate as an encoder 116A using an embedding model, which may be pretrained to convert text to embeddings. The one or more processors 116 may be configured to operate as a query embedding transformation model 116B, which transforms a baseline query embedding produced by the encoder in response to a query into modified query embeddings based on a distance between the baseline query embedding and training query embeddings in the training query embedding index stored in the one or more databases 114. The one or more processors 116 may be configured to operate as a searcher 116C to, e.g., perform a nearest neighbor search to determine the distance between the baseline query embedding and training query embeddings in the training query embedding index and to identify based on the modified query embedding the one or more nearest matching text embeddings in the text embedding index in the one or more databases 114 and to retrieve the resulting text(s) from the corpus in the one or more databases 114. The one or more processors 116 may be further configured to operate as part of a RAG application. For example, the one or more processors 116 may be configured to operate as a prompt constructor 116D to generate an LLM prompt by integrating the retrieved text with the user query according to prompt parameters, which may be stored in database 114.

The memory 118 may be any memory (such as RAM, flash, etc.) that temporarily or permanently stores data, such as any number of software programs, executable instructions, machine code, algorithms, and the like that can be executed by the one or more processors 116 to perform one or more corresponding operations or functions. In some implementations, the memory 118 may be connected directly to or integrated with the one or more processors 116, e.g., as a processing in memory (PIM) chip. The memory 118, for example, may be a computer-readable medium that participates in providing instructions to the one or more processors 116, directly or via intermediate memory, for execution, including without limitation, non-volatile storage media (e.g., optical disks, magnetic disks, flash drives, etc.), or volatile media (e.g., SDRAM, ROM, etc.). In some implementations, hardwired circuitry may be used in place of, or in combination with, software instructions to implement aspects of the disclosure. As such, implementations of the subject matter disclosed herein are not limited to any specific combination of hardware circuitry and/or software.

The memory 118 may be a computer-readable medium that includes various instructions, such as instructions for implementing an operating system (e.g., Mac OS®, Windows®, Linux, etc.). The operating system may be multi-user, multiprocessing, multitasking, multithreading, real-time, and the like. The operating system may perform basic tasks, including but not limited to recognizing input from input devices in the interface 112, sending output to display devices in the interface 112, keeping track of files and directories on computer-readable medium, controlling peripheral devices (e.g., disk drives, printers, etc.) which can be controlled directly or through an I/O controller, and managing traffic on a bus. Computer-readable medium may further include network communications instructions to establish and maintain network connections via the interface 112 (e.g., software for implementing communication protocols, such as TCP/IP, HTTP, Ethernet, telephony, etc.).

The described features may be implemented in one or more computer programs that may be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program may be written in any form of programming language (e.g., C, C++, Objective-C, Java, Python), including compiled or interpreted languages, and it may be deployed in any form, including as a stand-alone program or as a module, component, subroutine, or other unit suitable for use in a computing environment.

Suitable processors for the execution of a program of instructions may include, by way of example, both general and special purpose microprocessors, and the sole processor or one of multiple processors or cores, of any kind of computer. Generally, a processor may receive instructions and data from a read-only memory or a random-access memory or both. A computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

The features of the server computer 110 may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship with each other.

One or more features or steps described herein may be implemented using an Application Programming Interface (API) and/or Software Development Kit (SDK), in addition to those functions specifically described above as being implemented using an API and/or SDK. An API may define one or more parameters that are passed between a calling application and other software code (e.g., an operating system, library routine, function) that provides a service, that provides data, or that performs an operation or a computation. SDKs can include APIs (or multiple APIs), integrated development environments (IDEs), documentation, libraries, code samples, and other utilities.

The API and/or SDK may be implemented as one or more calls in program code that send or receive one or more parameters through a parameter list or other structure based on a call convention defined in an API and/or SDK specification document. A parameter may be a constant, a key, a data structure, an object, an object class, a variable, a data type, a pointer, an array, a list, or another call. API and/or SDK calls and parameters may be implemented in any programming language. The programming language may define the vocabulary and calling convention that a programmer will employ to access functions supporting the API and/or SDK.

In some implementations, an API and/or SDK call may report to an application the capabilities of a device running the application, such as input capability, output capability, processing capability, power capability, communications capability, etc.

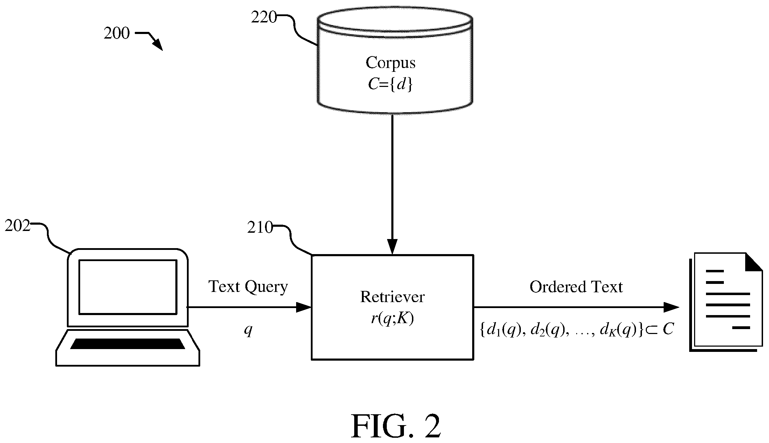

FIG. 2 illustrates an example architecture of a text retrieval system 200 within which various aspects of the subject matter disclosed herein can be implemented. The architecture of the text retrieval system 200 includes a retriever 210 and a retrieval dataset in a form of the corpus 220. The corpus 220, denoted herein as *C,* is a collection of textual items, each denoted herein as *d*, that are available for text retrieval. The textual items, by way of example, may include documents, articles, text snippets, sentences, JSON or YAML schemas, or any other item that is textual in nature, which are collectively sometimes referred to herein as text or documents.

The retriever 310 may implement one or more aspects of the present disclosure as discussed herein. In operation, the retriever 210 receives a query *q* from a user, e.g., via a computing device 202. The retriever 210 is configured to map the query *q* to texts in the corpus 220 and retrieve the *K* closest matching texts based on a retrieval function, denoted as $r(q;K)$. In response to the user query *q,* the retriever 210 outputs texts that are the *K* closest matching texts that are part of the corpus 220 and which may be ranked in order of relevance, denoted as $\{d_1(q), d_2(q), ... d_K(q)\}$.

The text retrieval system 200 may be integrated into applications, such as search engines or recommendation systems, in which the retrieved texts may be provided or identified to the user via an electronic interface with the computing device 202. In another example, the text retrieval system 200 may be integrated into other applications that receive and further process the retrieved texts before returning a result to the user via an electronic interface with the computing device 202.

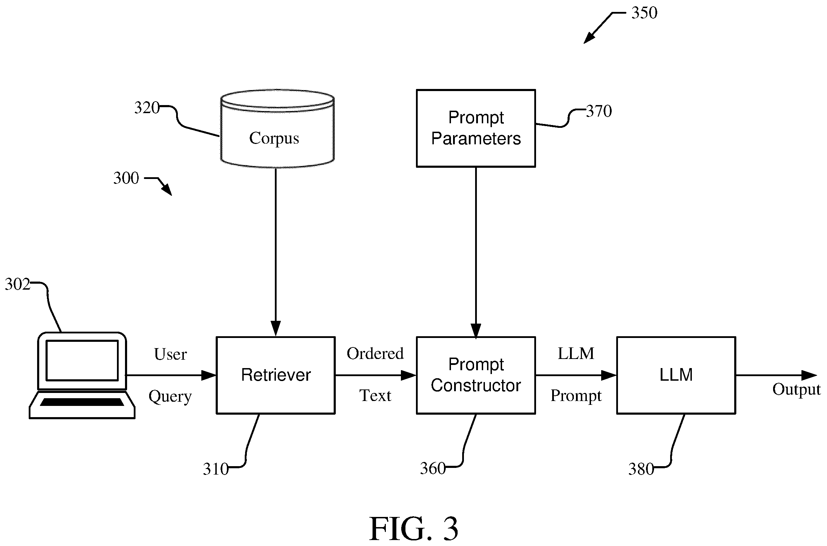

FIG. 3, by way of example, illustrates an example architecture 350 of a Retrieval Augmented Generation (RAG) application for a Large Language Model (LLM) in which is integrated a text retrieval system 300 that may be configured to implement various aspects of the subject matter disclosed herein. The RAG application uses the text retrieval system 300 to provide external knowledge retrieval for an LLM 380.

As discussed in FIG. 2, the text retrieval system 300 includes a retriever 310 and a retrieval dataset in a form of the corpus 320. The retriever 310 receives a user query is via a computing device 302 and identifies the top $K$ relevant texts from the corpus 320 that correspond to the user query and outputs the top $K$ relevant texts, which may be ranked in order of relevance.

Within the architecture 350 of the RAG application, the ordered texts from the text retrieval system 300 are received by a prompt constructor 360 along with the user query. The prompt constructor 360 integrates, e.g., concatenates and/or injects, the retrieved texts with the user query to form an LLM prompt based on specific prompt parameters 370. The prompt parameter 370, for example, may provide parameters to the prompt constructor 360 to create specialized prompts to guide the behavior of the LLM 380 for specific applications. The LLM 380 receives the LLM prompt, which includes the ordered texts from the corpus 320 that were retrieved by the retriever 310 and outputs a response to the user query, which may be based on the external knowledge in the ordered texts.

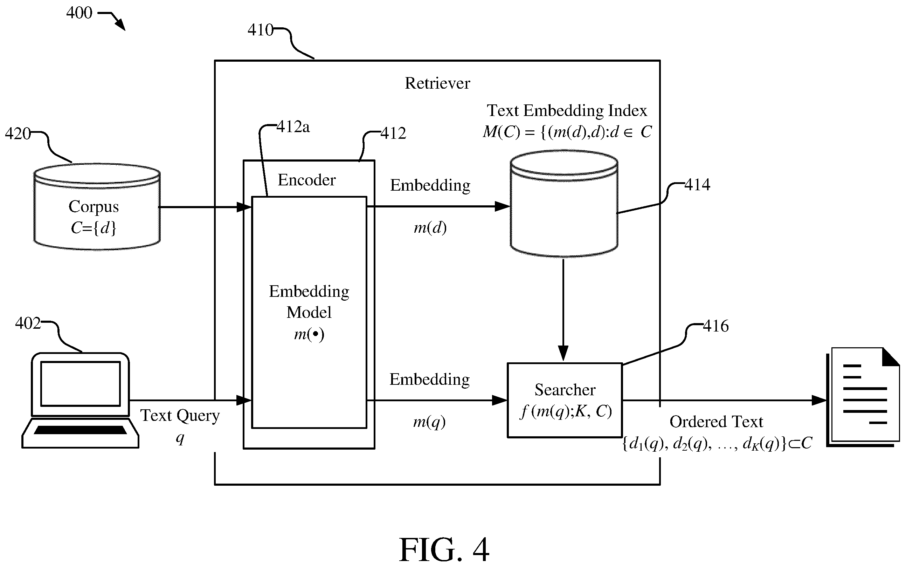

FIG. 4 illustrates a text retrieval system 400 that performs conventional embedding based retrieval of texts from the corpus 420 by the retriever 410. The retriever 410 includes an encoder 412, which includes a pre-trained embedding model 412a that converts text into fixed dimensional numeric vectors called embeddings. The embedding model 412a is trained to perform a function $m(\cdot)$ that operates on any item of text $d$ to yield its $M$ dimensional embedding vector $m(d)$. The embedding model 412a is trained to maximize the similarity between queries and texts that are relevant to the queries, while minimizing the similarity between queries and texts that are irrelevant to the queries. The embedding model 412a, for example, may be an off-the-shelf embedding model, which has been trained using generic training data.

As illustrated, the embedding model 412a of the encoder 412 operates on candidate texts from the corpus to produce text embeddings $m(d)$ and operates on the text query $q$ received from the computing device 402 to produce a query embedding $m(q)$. As illustrated, the text embeddings $m(d)$ produced by the embedding model 412a, are stored as a text embedding index 414, denoted as $M(C)$, in a database. The generation of the text embedding index 414, including producing the text embeddings $m(d)$ from the candidate texts in the corpus 420 by the embedding model 412a and storage of the resulting text embeddings $m(d)$ in the text embedding index 414 may be a one time operation, e.g., performed during initialization of the text retrieval system 400. The generation of the query embedding $m(q)$ by the embedding model 412a in response to the text query $q$ is performed at run time and is performed in response to each user query. Thus, the encoder 412 uses the same uses the same embedding model 412a at different times to operate on candidate texts from the corpus to produce text embeddings $m(d)$ and text queries $q$ to produce a query embedding $m(q)$, and accordingly, encoder 412 is sometimes referred to as a bi-encoder.

The retriever 410 further includes a searcher 416 that may be configured to perform a nearest neighbor search or vector search to find the closest data points to a given query point in a high-dimensional vector space. The searcher 416 may implement any method or algorithm for nearest neighbor search, such as an exhaustive brute-force search as well as approximate nearest neighbor (ANN) search. The searcher 416 receives the query embedding $m(q)$ produced by the embedding model 412a and searches the text embedding index 414 for the nearest $K$ embedding vectors from the predefined corpus of $M$ dimensional text embeddings. For example, if the text corpus is denoted as texts $\{d_i: i=1,2, ...,N\}$, and the vector text embedding index 414 is denoted as $C=\{m(d_i): i=1,2, ...,N\}$ where $m(d_i)$ denotes the embedding vector of text $d_i$, and the input query denoted as $q$ with corresponding query embedding vector $m(q)$, the searcher 416 applying a nearest neighbor algorithm outputs the indexes of the K nearest neighbors in the corpus 420 to the input query embedding vector $m(q)$, which may be denoted as $KNN(m(q),K; C)$. The searcher 416, for example, independently determines a similarity score (or equivalently a distance score) between the input query vector $m(q)$ and each text embedding $m(d_i)$ stored in the text embedding index 414. The text with the highest similarity score (or equivalently, the least distance) is considered the most relevant and texts with the $K$ highest similarity scores may be produced ranked in order $\{d_1(q), d_2(q), ... d_K(q)\}$.

Embedding models, such as used in encoder 412, are typically developed using a large number of examples that map text queries to the most relevant texts. There is significant cost, time and effort involved, both in the collection of training examples and training the embedding model and accordingly, industry practice, is to use an off-the-shelf pre-trained embedding model. A technical problem that results from using such an embedding model 412a in the text retrieval system 400 is that the text retrieval system is not optimized for, and may not be capable of, text retrieval for specific tasks, such as retrieving medical, scientific, accounting, or other specific types of information. For example, the relevant text for such specific text retrieval tasks may not be included in the corpus 420. Even if the relevant text is added to the corpus 420, the embedding model 412a is not trained with respect to the specific tasks, and accordingly, may not produce embeddings that enable retrieval of the relevant text in response to specific task related queries. Accordingly, for a conventional text retrieval systems 400, the embedding model 412a needs to be specifically retrained based on the task-specific training information, but this may be prohibitively expensive and time consuming.

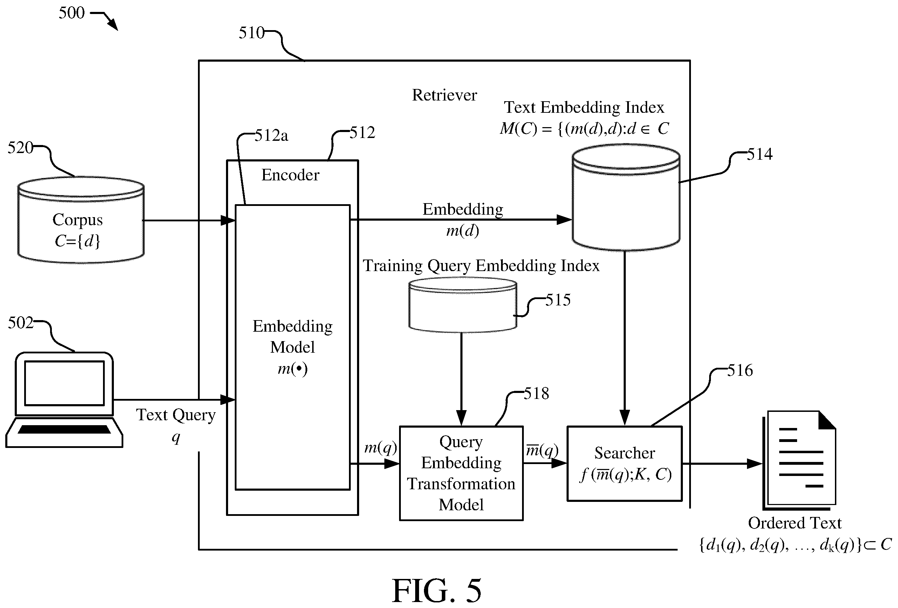

FIG. 5 illustrates a text retrieval system 500 that is configured to perform embedding based retrieval in accordance with implementations of the present disclosure. The text retrieval system 500 may be integrated into applications, such as search engines and recommendation systems, in which the retrieved texts may be provided or identified to the user via an electronic interface, as illustrated in FIG. 2 or integrated into applications, such as the RAG architecture 350 illustrated in FIG. 3.

Similar to the text retrieval system 400, shown in FIG. 4, the text retrieval system 500 may use an off-the-shelf pre-trained embedding model to reduce cost and increase the speed of implementation. The retriever 510 of the text retrieval system 500, however, is additionally trained based on task-specific training information to improve the retrieval performance for task specific information. The text retrieval system 500, for example, may be configured to retain the baseline retrieval performance of the pre-trained embedding model for queries if there is no task-specific training examples available. With an increase of task-specific training examples, the text retrieval system 500 may be trained to improve task-specific retrieval performance for queries that are similar to the task-specific training queries. The text retrieval system 500, thus, is able to leverage the task-specific training information without sacrificing the general purpose language modeling capabilities of the baseline embedding model.

The text retrieval system 500 includes a retriever 510 and a corpus 520. Similar to the text retrieval system 400 shown in FIG. 4, the retriever 510 includes an encoder 512, which includes a pre-trained embedding model 512a that converts text into fixed dimensional numeric vectors called embeddings. The embedding model 512a in the encoder 512 may be any desired pre-trained embedding models, including, but not limited to *msmarco-distilbert-base-tas-b, e5-large-v2,* and *text-embedding-ada-002,* which may be trained to maximize the similarity between queries and texts that are relevant to the queries, while minimizing the similarity between queries and texts that are irrelevant to the queries. The embedding model 512a is trained to perform a function $m(\cdot)$ that operates on any item of text $d$ to yield its $M$ dimensional embedding vector $m(d)$.

As illustrated, the embedding model 512a of the encoder 512 operates on candidate texts from the corpus to produce text embeddings $m(d)$ and operates on the text query $q$ from the user via computing device 502 to produce a query embedding $m(q)$. As illustrated, the text embeddings $m(d)$ produced by the embedding model 512a, are stored as a text embedding index 514, denoted as $M(C)$, in a database. The generation of the text embedding index 514, including producing the text embeddings $m(d)$ from the candidate texts in the corpus 520 by the embedding model 512a and storage of the resulting text embeddings $m(d)$ in the text embedding index 514 may be a one-time operation, e.g., performed during initialization of the text retrieval system 500. The generation of the query embedding $m(q)$ by the embedding model 512a in response to the text query $q$ is performed at run time and is performed in response to each user query. Thus, the encoder 512 uses the same uses the same embedding model 512a at different times to operate on candidate texts from the corpus to produce text embeddings $m(d)$ and text queries $q$ to produce a query embedding $m(q)$, and accordingly, encoder 512 is sometimes referred to as a bi-encoder.

As illustrated, the retriever 510 additionally includes a query embedding transformation model 518 that receives a baseline query embedding $m(q)$ from the embedding model 512a and transforms the baseline query embedding $m(q)$ to a modified query embedding $\overline{m}(q)$ that is in the same vector space. Thus, the text embeddings $m(d)$, the baseline query embeddings $m(q)$, and the modified query embeddings $\overline{m}(q)$ are numeric vectors with the same fixed dimension. The query embedding transformation model 518 is trained based on the task-specific training examples to produce a modified query embedding $\overline{m}(q)$ that is used by the searcher 516 to search the text embedding index 514. The modified query embedding $\overline{m}(q)$ improves the task-specific retrieval performance for queries that are similar to task-specific training queries, but will result in the baseline retrieval performance of the pre-trained embedding model 512a in the encoder 512 for queries that are not close to the training queries in the task-specific training examples.

The query embedding transformation model 518 is trained using a labeled retrieval dataset that includes training queries and corresponding training texts. The training texts are added to the corpus 520 and are converted into training text embeddings by the embedding model 512a and stored in the text embedding index 514 with the embeddings for the other candidate texts from the corpus 520. Additionally, the training queries are converted by the embedding model 512a to training query embeddings, which are stored in a training query embedding index 515 in a database.

The query embedding transformation model 518 is trained to transform baseline query embeddings $m(q)$ to modified query embeddings $\overline{m}(q)$ based on a distance between the baseline query embeddings $m(q)$ and the training query embeddings stored in the training query embedding index 515. The distance between the baseline query embeddings $m(q)$ and the training query embeddings stored in the training query embedding index 515 may be determined using any desired distance metric, such as, but not limited to cosine distance, a Euclidean distance, a squared Euclidean distance, a vector dot product, a Manhattan distance, a Hamming distance, etc. The distance between a baseline query embedding $m(q)$ and the training query embeddings, for example, may be performed by the searcher 516 or another searcher, which receives the baseline query embedding $m(q)$ and determines a distance score between the baseline query embedding m($q$) and each training query embedding stored in the training query embedding index 515, to determine the distance between the baseline query embedding m($q$) and the closest training query embedding. The query embedding transformation model 518 receives the distance between the baseline query embeddings $m(q)$ and the closest training query embedding stored in the training query embedding index 515 and uses the distance and trained parameters $\theta^*$ to produce the modified query embeddings $\overline{m}(q)$.

The modified query embedding $\overline{m}(q)$ produced by the query embedding transformation model 518 is received by the searcher 516 and used to search the text embedding index 514. Similar to the text retrieval system 400 shown in FIG. 4, the searcher 516 may be configured to perform a nearest neighbor search or vector search to find the closest data points to a given query point in a high-dimensional vector space. The searcher 516 may implement any method or algorithm for nearest neighbor search, such as an exhaustive brute-force exact search as well as approximate nearest neighbor (ANN) search. The searcher 516 searches the text embedding index 514 based on the modified query embedding $\overline{m}(q)$ to identify the nearest $K$ text embeddings from the corpus 520, which includes the training texts from the labeled retrieval dataset. For example, with the vector corpus in the text embedding index 514 denoted as $C=\{m(d_i): i=1,2, ...,N\}$ and the input vector, i.e., the modified query embedding $\overline{m}(q)$, the searcher 516 applying a nearest neighbor algorithm to produce the indexes of the K nearest neighbors in the corpus 520 to the input vector $\overline{m}(q)$, which may be denoted as $KNN(\overline{m}(q),K; C)$. The searcher 516, for example, independently determines a similarity score between the input query vector, i.e., the modified query embedding $\overline{m}(q)$, and each text embedding $m(d)$ stored in the text embedding index 514. As discussed above, the similarity score may be any desired distance metric, such as, but not limited to cosine distance, a Euclidean distance, a squared Euclidean distance, a vector dot product, a Manhattan distance, a Hamming distance, etc. The text with the highest similarity score is considered the most relevant and texts from the corpus that correspond to the $K$ highest similarity scores may be produced ranked in order $\{d_1(q), d_2(q), ... d_K(q)\}$.

The parameters $\theta$ of the query embedding transformation model 518 are trained using training examples to be optimized for desired specific retrieval task. The training examples may be a task-specific labeled retrieval dataset consisting of a set of query-text example pairs $\mathcal{D} = \{(q_i, d_i): i = 1, 2,..., N\}$; where each training query $q_i$ is an example of a input training query expected for the retrieval task, and the corresponding text $d_i$ is the best matching text for the query, according to that desired specific retrieval task. Based on the task-specific labeled retrieval dataset, the query embedding transformation model 518 may be trained such that the modified query embedding $\overline{m}(q)$, i.e., which may alternatively be written as $y(q; \theta^*)$, using the trained parameters $\theta^*$, would be closer to the ideal text vector for each input query q, compared to the baseline query embedding vector $m(q)$, thereby producing better retrieval results for the given task.

The query embedding transformation model 518 may use an interpolation function that is based on the distance between the baseline query embedding $\overline{m}(q)$ and the training query embeddings to transform the baseline query embedding $\overline{m}(q)$ to a modified query embedding $\overline{m}(q)$ according to a set of parameters that as the distance between the baseline query embedding $\overline{m}(q)$ and the training query embedding decreases, the modified query embedding $\overline{m}(q)$ will be closer, i.e., more similar or less distant, to the training text embedding. For example, in some implementations, the query embedding transformation model 518 may use an interpolation function and is trained with a set of parameters such that an exact match between a baseline query embedding $\overline{m}(q)$ and a training query embedding results in a modified query embedding $\overline{m}(q)$ that is the training text embedding, and as a distance between a baseline query embedding $\overline{m}(q)$ and the training query embeddings approaches infinity the modified query embedding $\overline{m}(q)$ will approach the baseline query embedding $m(q)$. In some implementations, the query embedding transformation model 518 may use an interpolation function and is trained with threshold parameters such that an exact match between a baseline query embedding $\overline{m}(q)$ and a training query embedding results in a modified query embedding $\overline{m}(q)$ that is the training text embedding, a distance between a baseline query embedding $\overline{m}(q)$ and the training query embeddings that is greater than a threshold results in a modified query embedding $\overline{m}(q)$ that is the baseline query embedding $m(q)$, and a distance between a baseline query embedding $\overline{m}(q)$ and the training query embeddings that is less than the threshold results in a modified query embedding $\overline{m}(q)$ that is the training text embedding. Thus, the query embedding transformation model 518 may use an interpolation function that is based on the distance between the baseline query embedding vector $m(q)$ and the training query embeddings to transform the baseline query embedding vector $\overline{m}(q)$ to a modified query embedding $\overline{m}(q)$ that results in the retrieval of the desired training text for queries that are close to the corresponding training query, or that is the same as or is similar to the baseline query embedding vector $\overline{m}(q)$ for queries that are sufficiently distant to any training query, and in some implementation interpolates between these two outputs for queries that are at an intermediate distance from training queries.

The query embedding transformation model 518 may use various types of interpolation functions and parameters to achieve the above parameters. For example, in some implementations, the interpolation function may use smooth localized kernel functions that are centered at the locations of the training query embeddings. The parameters $\theta$ of the query embedding transformation model 518, for example, may be the embedding vectors of the training queries and corresponding training texts, as well as the smoothness scale parameter of the localized kernel functions. In some implementations, the kernel functions may include a threshold parameter to limit the degree of separation between the baseline query embedding $\overline{m}(q)$ and the training query embeddings before the modified query embedding $\overline{m}(q)$ will be the baseline query embedding $m(q)$. In some implementations, the interpolation function may use a multivariate Gaussian process, where the parameters of the query embedding transformation model 518 may be the embedding vectors of the training queries and corresponding training texts, a row correlation matrix that captures the correlation between different components of the query embedding vectors, a scale parameter of the localized kernel functions, and an additive noise variance parameter.

In one implementation, the interpolation operation of the query embedding transformation model 518 may be described by a family of parameterizable kernels with parameters that are trained on the labeled retrieval dataset. The parametrized kernel, generally denoted as $\kappa(s; \theta)$, maps a non-negative real number s to another non-negative real number $\kappa(s; \sigma)$, where the parameter $\sigma$ is a scale parameter. The kernel function used in the query embedding transformation model 518 may be configured so that as the distance s between the baseline query embedding $\overline{m}(q)$ and a training query embedding decreases, the modified query embedding $\overline{m}(q)$ will be closer to the training text embedding, as discussed above. For example, the kernel function used in the query embedding transformation model 518 may be configured so that for an exact match between a baseline query embedding $m(q)$ and the training query embedding, the resulting modified query embedding $\overline{m}(q)$ is the training text embedding, and as the distance between the baseline query embedding $\overline{m}(q)$ and the training query embedding approaches infinity the modified query embedding $\overline{m}(q)$ will approach the baseline query embedding $m(q)$. The kernel function used in the query embedding transformation model 518, for example, may have the characteristic for all $\sigma > 0$, $\kappa(0; \sigma) = 1$, and $\lim\limits_{r \to \infty} \kappa(s; \sigma) = 0$; and further, its derivative with respect to s satisfies $\frac{\partial}{\partial s}\kappa(s; \sigma) < 0$ for $s > 0$. Example embodiments of such kernel functions that may be used with the query embedding transformation model 518 include:

$$\kappa(s; \sigma) = e^{\frac{-s^2}{\sigma}}; \text{and} \qquad \text{eq. 1}$$

$$\kappa(s; \sigma) = \frac{\sigma}{\sigma + s^2}. \qquad \text{eq. 2}$$

The parameters of the query embedding transformation model 518 may include the following: a set of $N > 0$ pairs of $M$ dimensional vector locations $c_i$ and corresponding $M$ dimensional vector values $v_i$, an integer $K \in \{1, 2, ..., N\}$ denoting a desired number of nearest neighbor locations, and the aforementioned scale parameter $\sigma$. Accordingly, the overall parameters for the query embedding transformation model 518 may be provided as $\theta = \{(c_i, v_i): i = 1, 2, ..., N; K; \sigma\}$. In some implementations, an additional threshold parameter may be included so that a distance s between the baseline query embedding $\overline{m}(q)$ and a training query embedding that is greater than a threshold results in a modified query embedding $\overline{m}(q)$ that is the baseline query embedding $m(q)$, and a distance between a baseline query embedding $\overline{m}(q)$ and a training query embedding that is less than the threshold results in a modified query embedding $\overline{m}(q)$ that is the training text embedding. In some implementations, a distance s between a baseline query embedding $\overline{m}(q)$ and a training query embedding that is less than the threshold may result in a modified query embedding $\overline{m}(q)$ that is interpolated between the baseline query embedding $m(q)$ and the training text embedding.

The output vector $y(q, \theta)$ of the query embedding transformation model 518, i.e., the modified query embedding $\overline{m}(q)$, with parameters $\theta$, in response to an input text query q may be described as follows:

$$y(q; \theta) = m(q) + u(q, \theta) \sum_{i \in \mathcal{N}(q;K)} w(q, c_i, \theta)(v_i - m(q)). \qquad \text{eq. 3}$$

In equation 3, $\overline{m}(q)$ is the baseline query embedding produced by the embedding model 512a of the encoder 512, and $\mathcal{N}(q; K)$ is the nearest neighbor index set, i.e., the training query embedding index 515, given by

$$\mathcal{N}(q; K) = KNN(m(q), K; \{c_i: i = 1, 2, ..., N\}), \qquad \text{eq. 4}$$

which denotes the indexes of the $K$ vector locations in $\{c_i\}$ that are closest to the embedding vector $\overline{m}(q)$ of the query q. Additionally, in equation 3, $w(q, c_i; \theta)$ are kernel location weights given by

$$w(q, c_i; \theta) = \frac{\kappa\big(\|m(q) - c_i\|; \sigma\big)}{\sum_{j \in \mathcal{N}(q; K)} \kappa\big(\|m(q) - c_j\|; \sigma\big)}, i \in \mathcal{N}(q; K), \qquad \text{eq. 5}$$

where $\|x\|$ is the Euclidean norm of an $M$ dimensional vector $x$. Additionally, in equation 3, $u(q; \theta)$ is the overall weight given by

$$u(q; \theta) = \max_{i \in \mathcal{N}(q; K)} \kappa\big(\|m(q) - c_j\|; \sigma\big). \qquad \text{eq. 6}$$

In one implementation, the operation of the query embedding transformation model 518 may be described by a family of parameterizable multivariate Gaussian process models with parameters that are trained on the labeled retrieval dataset. Each member of the family is characterized by a corresponding parametrized kernel $\kappa(s; \theta)$. The parametrized kernel may operate similarly to the parameters kernels discussed above and in relation to equations 1 and 2.

The parameters of the query embedding transformation model 518 using a multivariate Gaussian process model may include the following: the row covariance matrix $\Lambda$ denoting the covariance of the query embedding vectors, the aforementioned scale parameter $\sigma$, a noise covariance parameter $\sigma_n$. Accordingly, the overall for the query embedding transformation model 518 using a multivariate Gaussian process models may be provided as o that the overall parameters are given by $\theta = \{\Lambda; \sigma, \sigma_n\}$.

The output vector $y(q, \theta)$ of the query embedding transformation model 518, i.e., the modified query embedding $\overline{m}(q)$, using a multivariate Gaussian process models with parameters $\theta$, in response to an input text query $q$ may be described as follows:

$$y(q; \theta) = m(q) + W(\theta)v(q; \theta). \qquad \text{eq. 7}$$

In equation 7, $\overline{m}(q)$ is an $M$ dimensional embedding column vector of the query $q$ given by the embedding model 512a of the encoder 512, and $v(q; \theta)$ is an $N$ dimensional column vector that depends on the query $q$, and is given by

$$v(q; \theta) = \big[\kappa\big(\|m(q) - m(q_i)\|; \sigma\big), \kappa\big(\|m(q) - m(q_2)\|; \sigma\big), \ldots, \kappa\big(\|m(q) - m(q_N)\|; \sigma\big)\big]^T. \qquad \text{eq. 8}$$

Additionally, the term $W(\theta)$ in equation 7 is a query-independent $M \times N$ dimensional weight matrix that is defined as

$$W(\theta) = Z^T K(\theta)^{-1} \qquad \text{eq. 9}$$

and will be pre-computed during training. In equation 9, the $Z$ term is an $N \times M$ matrix given by

$$Z = [z_1, z_2, \ldots, z_N]^T, \qquad \text{eq. 10}$$

in which each $z_i$ is the difference between the $i^{th}$ $M$ dimensional training text embedding vector and its corresponding $M$ dimensional training query embedding vector:

$$z_i = m(d_i) - m(q_i). \qquad \text{eq. 11}$$

Additionally, in equation 9, the term $K(\theta)$ is a symmetric $N \times N$ matrix given by its elements:

$$K(\theta) = \big[k_{ij}(\theta)\big], \qquad i, j = 1, 2, \ldots, N \qquad \text{eq. 12}$$

Where each element $k_{ij}$ is an augmented kernel function given by

$$k_{ij}(\theta) = \kappa\left(\left\|m(q_i) - m(q_j)\right\|; \sigma\right) + \delta_{ij}\,\sigma_n^2 \qquad \text{eq. 13}$$

and $\delta_{ij}$ = 1 if $i = j$ and = 0 otherwise.

The operation of the text retrieval system 500 includes a hyperparameter selection stage, a training stage and a retrieval stage.

The first stage for operation of the text retrieval system 500 consists of selecting the hyperparameters of the system, *i.e.,* the baseline embedding model $m(\bullet)$, the nearest neighbor searcher function *KNN*() and the kernel function $\kappa()$. As discussed above, the embedding model 512a selected for the encoder 512 may be an off-the-shelf pre-trained embedding model, to reduce costs and simplify implementation. Similarly, the searcher 516 and the nearest neighbor searcher function KNN( ) used to search the text embedding index 514 and the training query embedding index 515, may be selected from well-known and available search functions, and, for example, may be use exhaustive (slow but accurate) nearest neighbor search techniques or approximate (faster but less accurate) nearest neighbor search techniques. In implementations in which parameterizable interpolation formulas are used, additional hyperparameters that may be selected include a specific retrieval metric $\mu$ is selected from one of the well known retrieval metrics such as *NDCG@k* (Normalized Discounted Cumulative Gain (NDCG) at k (depth of the ranked list), *MRR@k* (Mean Reciprocal Rank (MRR) at k) and *MAP@k* (Mean Average Precision (MAP) at k). Additionally, a finite grid of discrete values may be chosen for the scale parameter σ and the number of nearest neighbors *K* parameter as $\mathcal{P}$ = {(σ, *K*)}.

The query embedding transformation model 518 may then be trained by first obtaining a labeled retrieval dataset consisting of a set of query-text pairs $\mathcal{D}$ = {($q_i$, $d_i$): $i$ = 1, 2,..., *N*}. The training texts ($d_i$) are added to the corpus 520 and are converted into training text embeddings $m(d_i)$ by the embedding model 512a and stored in the text embedding index 514 with the embeddings for the other candidate texts from the corpus 520. Additionally, the training queries ($q_i$) are converted by the embedding model 512a to training query embeddings $m(q_i)$, which are stored in a training query embedding index 515 in a database.

Based on this training dataset, the query embedding transformation model 518 may be trained. For example, in implementations in which parameterizable interpolation formulas are used, the query embedding transformation model 518 may be trained by a process of *F*-fold cross validation. In *F*-fold cross validation, the dataset $\mathcal{D}$ , is used to generate *F* folds of the data:

$$\mathcal{D}_i = \{(Train_i, Test_i): Train_i \cup Test_i = \mathcal{D}, i = 1, 2, \ldots, F\}. \qquad \text{eq. 14}$$

Based on these folds, the overall training procedure is described as follows. For (σ, *K*) ∈ $\mathcal{P}$ and for *i* = 1, 2, ..., *F*, a training step is performed by choosing the kernel function vector locations and corresponding vector values as $c_j = m(q_j)$, $v_j = m(d_j)$, $j \in Train_i$. An evaluation step is performed based on the query embedding transformation model with the above vector locations and values, as well as the currently selected values of σ and *K*, by forming the model parameter vector $\theta$ = {($c_j$, $d_j$), $j \in Train_i$; σ; *K*}, and determining the query embedding transformation model $y(q_j; \theta)$ for each query $q_j$ in the testing set $Test_i$ and retrieving the corresponding text as $KNN(y(q_j; \theta), K)$ . Based on the collection of retrieved texts over the testing set $Test_i$ and how they compare to the correct text in the test set, the corresponding value of the retrieval metric as $\mu_i$ is then determined.

Let $\mu_{ave}$ (σ, *K*) be the average value of the retrieval metric over the *F* folds, as determined by the above procedure, for the currently selected values of σ and *K*. The values of $\mu_{ave}$ (σ, *K*) are saved for each discrete value of (σ, *K*) ∈ $\mathcal{P}$ . The optimal values of these parameters are then selected as the ones that produced the maximum value of the metric:

$$\mu^*, K^* = arg\,max\,\{\,\mu(\sigma, K): (\sigma, K) \in \mathcal{P}\,\}. \qquad \text{eq. 15}$$

Finally, the query embedding transformation model 518 is retrained on the full training dataset $\mathcal{D}$ , and the optimal model parameters are selected as

$$\theta^* = \{(c_i = m(q_i), v_i = m(d_i)) : i = 1, 2, \ldots, N; \sigma^*; K^*\}. \qquad \text{eq. 16}$$

which completes the training process.

In implementations in which a multivariate Gaussian process is used, the query embedding transformation model 518 may be trained by minimizing the negative log marginal likelihood function:

$$L(\theta; \{(m(q_i), m(d_i)\})$$

$$= \frac{nd}{2} ln(2\pi) + \frac{d}{2} ln(det(K)) + \frac{n}{2} ln(det(\Lambda))$$

$$+ \frac{1}{2} Trace(K^{-1} z \Lambda^{-1} z^T). \qquad \text{eq. 16}$$

Any parameter optimization method for minimizing loss functions that are differentiable with respect to the parameters may be used for this purpose. For example, in one implementation, gradient descent algorithms may be used for the minimization. The outcome of the training process is a new optimal value of the parameters, denoted as $\theta^*$.

After training, the text retrieval system 500 may be used to retrieve the best matching text from the corpus 520 of texts *C*. The text retrieval system 500, for example, may be initialized by first indexing the embeddings *m(d)* of the texts in the corpus *C* as $\mathcal{M}(C) = \{(m(d), d): d \in C\}$, as produced by the embedding model 512a of the encoder 512, and which is stored in the text embedding index 514.

Thereafter, given an arbitrary input text query *q*, and a number *K* of texts to be retrieved, the desired number of texts may be retrieved in two stages by first using the embedding model 512a of the encoder 512 to produce a baseline query embedding *m(q)*. The trained query embedding transformation model 518 receives the baseline query embedding *m(q)* and the searcher 516 or another searcher performs a search of the training query embedding index 515 to determine the distance between the baseline query embedding *m(q)* and the training query embeddings. Based on the distance between the baseline query embedding $\overline{m}(q)$ and the training query embeddings, the trained query embedding transformation model 518 transforms the baseline query embedding $\overline{m}(q)$ to the modified query embedding $\overline{m}(q)$, i.e., the transformed query embedding vector $y(q, \theta^*)$.

The searcher 516 then searches the text embedding index 514 to find the *K* text embedding vectors that are nearest to the transformed query embedding vector $y(q, \theta^*)$, as follows:

$$Documents(q; K) = KNN\big(y(q, \theta^*): K, \mathcal{M}(C)\big), \qquad \text{eq. 16}$$

where *KNN*(.) is the nearest neighbor search function. The corresponding top-K texts are retrieved from the corpus 520 and are output by the retriever 510 as the top *K* relevant texts, which may be ranked in order of relevance. The ordered texts may be provided or identified to the user via an electronic interface, e.g., as the result of a search engine or recommendation systems, or may be provided to another application, such as a RAG application as illustrated in FIG. 2.

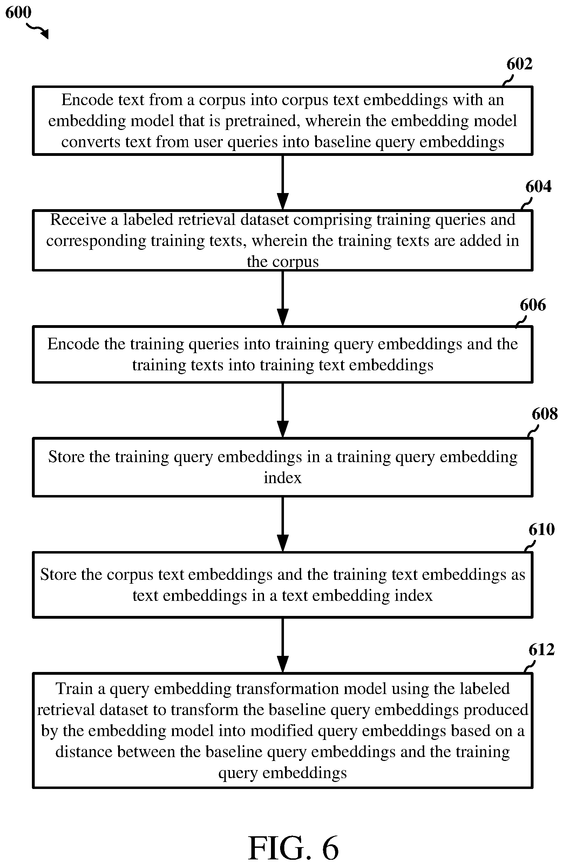

FIG. 6 shows an illustrative flowchart depicting an example method 600 for training a text retrieval system for embedding based retrieval of text, according to some implementations. The example method 600 is described as a computer-implemented method, e.g., which may be performed by the server computer 110 illustrated in FIG. 1 that is configured with the architecture of the text retrieval system 500 shown in FIG. 5.

At 602, text from a corpus is encoded into corpus text embeddings with an embedding model that is pretrained, wherein the embedding model converts text from user queries into baseline query embeddings. Encoding text into corpus text embeddings *m(d)* with an embedding model is discussed in relation to the corpus 520 and encoder 512 and embedding model 512a in FIG. 5.

At 604, a labeled retrieval dataset that includes training queries and corresponding training texts is received, where the training texts are added to the corpus, e.g., as discussed in relation to training the text retrieval system 500 in reference to FIG. 5.

At 606, the training queries are encoded into training query embeddings and the training texts are encoded into training text embeddings, e.g., as discussed in relation to training the text retrieval system 500 and the embedding model 512a in reference to FIG. 5.

At 608, the training query embeddings are stored in a training query embedding index, e.g., as discussed in relation to the training query embedding index 515 in FIG. 5.

At 610, the corpus text embeddings and the training text embeddings are stored as text embeddings in a text embedding index, e.g., as discussed in relation to the text embedding index 514 in FIG. 5. The text embeddings, the baseline query embeddings, and the modified query embeddings may be numeric vectors of a same fixed dimension.

At 612, a query embedding transformation model is trained using the labeled retrieval dataset to transform the baseline query embeddings produced by the embedding model into modified query embeddings based on a distance between the baseline query embeddings and the training query embeddings, e.g., as discussed in relation to training the query embedding transformation model 518 in reference to FIG. 5. The query embedding transformation model, for example, may be trained using F-fold cross validation or by minimizing a negative log marginal likelihood function. In some implementations, training the query embedding transformation model may include training a parameterized interpolation model with the labeled retrieval dataset. In some implementations, training the query embedding transformation model may include training a parameterized multivariate Gaussian process model with the labeled retrieval dataset.

In some implementations, a searcher in the text retrieval system searches the text embedding index based on the distance between the modified query embeddings and the text embeddings in the text embedding index, e.g., as discussed in relation to searcher 516 in FIG. 5.

In some implementations, the query embedding transformation model may be trained to transform the baseline query embeddings into modified query embeddings based on a distance between the baseline query embeddings and the training query embeddings according to a set of parameters, such that as the distance between the baseline query embeddings and the training query embedding decreases, the modified query embeddings are less distant to the training query embedding, e.g., as discussed in relation to the operation of the query embedding transformation model 518 in reference to FIG. 5.

In some implementations, the query embedding transformation model may be trained to transform the baseline query embeddings according to a set of parameters such that an exact match between a baseline query embedding and a training query embedding results in a modified query embedding that is the training text embedding, and as the distance between a baseline query embedding and a training query embedding approaches infinity the modified query embedding is less distant to the baseline query embedding, e.g., as discussed in relation to the operation of the query embedding transformation model 518 in reference to FIG. 5.

In some implementations, the query embedding transformation model may be trained to transform the baseline query embeddings according to a set of parameters such that an exact match between a baseline query embedding and a training query embedding results in a modified query embedding that is the transformed query embedding, a distance between a baseline query embedding and a training query embedding that is greater than a threshold results in a modified query embedding that is the baseline query embedding, and a distance between a baseline query embedding and a training query embedding that is less than a threshold results in a modified query embedding that is the training query embedding, e.g., as discussed in relation to the operation of the query embedding transformation model 518 in reference to FIG. 5.

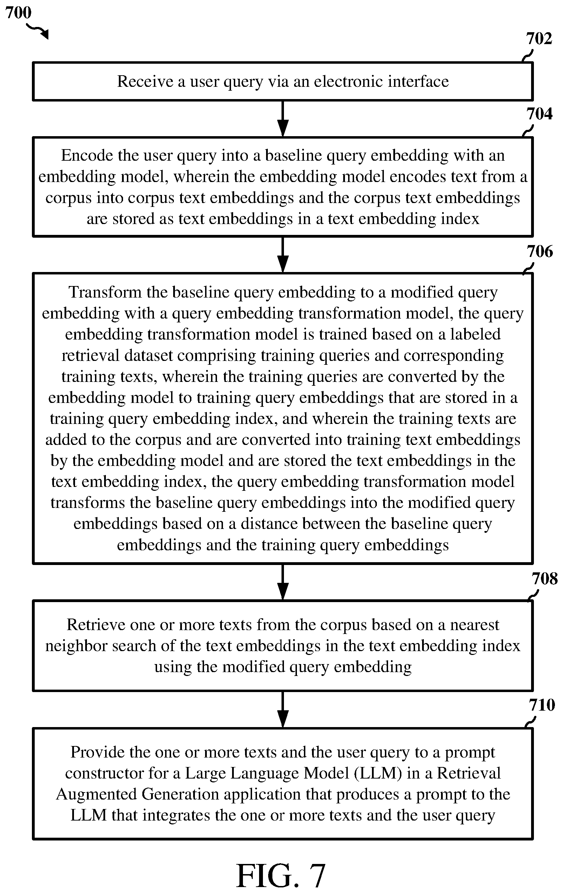

FIG. 7 shows an illustrative flowchart depicting an example method 700 for embedding based retrieval of text using a text retrieval system, according to some implementations. The example method 700 is described as a computer-implemented method, e.g., which may be performed by the server computer 110 illustrated in FIG. 1 that is configured with the architecture of the text retrieval system 500 shown in FIG. 5.

At 702, a user query is received via an electronic interface, e.g., as illustrated by the text query q from the computer device 502 received by the retriever 510 in FIG. 5.

At 704, the user query is encoded into a baseline query embedding with an embedding model, wherein the embedding model encodes text from a corpus into corpus text embeddings and the corpus text embeddings are stored as text embeddings in a text embedding index, e.g., as illustrated by embedding model 512a in encoder 512, the corpus 520, and text embedding index 514.

At 706, the baseline query embedding is transformed to a modified query embedding with a query embedding transformation model, the query embedding transformation model is trained based on a labeled retrieval dataset comprising training queries and corresponding training texts, where the training queries are converted by the embedding model to training query embeddings that are stored in a training query embedding index, and wherein the training texts are added to the corpus and are converted into training text embeddings by the embedding model and are stored as the text embeddings in the text embedding index, the query embedding transformation model transforms the baseline query embeddings into the modified query embeddings based on a distance between the baseline query embeddings and the training query embeddings. The transformation of the baseline query embedding to a modified query embedding, for example, is illustrated by the query embedding transformation model 518 in FIG. 5. In some implementations, the query embedding transformation model is a parameterized interpolation model with parameters trained on the labeled retrieval dataset. In some implementations, is a parameterized multivariate Gaussian process model with parameters trained on the labeled retrieval dataset.

At 708, one or more texts are retrieved from the corpus based on a nearest neighbor search of the text embeddings in the text embedding index using the modified query embedding, e.g., as illustrated by searcher 516 in FIG. 5.

At 710, the one or more texts and the user query are provided to a prompt constructor for a Large Language Model (LLM) in a Retrieval Augmented Generation application that produces a prompt to the LLM that integrates the one or more texts and the user query, e.g., as illustrated by prompt constructor 360 in RAG application shown in FIG. 3.

In some implementations, the query embedding transformation model may be trained to transform the baseline query embeddings into the modified query embeddings based on the distance between the baseline query embeddings and the training query embeddings according to a set of parameters such that as the distance between the baseline query embeddings and a training query embedding decreases, the modified query embeddings are less distant to the training text embedding, e.g., as discussed in relation to the operation of the query embedding transformation model 518 in reference to FIG. 5.

In some implementations, the query embedding transformation model may be trained to transform the baseline query embeddings with a set of parameters such that an exact match between a baseline query embedding and a training query embedding results in a modified query embedding that is the training text embedding, and as the distance between a baseline query embedding and a training query embedding approaches infinity the modified query embedding is less distant to the baseline query embedding, e.g., as discussed in relation to the operation of the query embedding transformation model 518 in reference to FIG. 5.

In some implementations, the query embedding transformation model may be trained to transform the baseline query embeddings with a set of parameters such that an exact match between a baseline query embedding and a training query embedding results in a modified query embedding that is the training text embedding, a distance between a baseline query embedding and a training query embedding that is greater than a threshold results in a modified query embedding that is the baseline query embedding, and a distance between a baseline query embedding and a training query embedding that is less than a threshold results in a modified query embedding that is the training text embedding, e.g., as discussed in relation to the operation of the query embedding transformation model 518 in reference to FIG. 5.

As used herein, a phrase referring to "at least one of" a list of items refers to any combination of those items, including single members. As an example, "at least one of: a, b, or c" is intended to cover: a, b, c, a-b, a-c, b-c, and a-b-c.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "generating," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The various illustrative logics, logical blocks, modules, circuits, and algorithm processes described in connection with the implementations disclosed herein may be implemented as electronic hardware, computer software, or combinations of both. The interchangeability of hardware and software has been described, in terms of functionality, and illustrated in the various illustrative components, blocks, modules, circuits and processes described above. Whether such functionality is implemented in hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example implementations, the functions described may be implemented in hardware, software, or any combination thereof. If implemented in software, the functions may be stored on or encoded as one or more instructions or code on a computer-readable medium. Computer-readable media includes computer storage media and computer transmission media. Storage media may be any available media that can be accessed by a computer. By way of example, and not limitation, such computer-readable media can include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer. Transmission media may be any transmission medium by which instructions may be conveyed. A computer-readable transmission medium may include carrier waves, transmission signals or the like. A computer-readable transmission medium may convey instructions between components of a single computer system and/or between plural separate computer systems.

Therefore, from one perspective, there has been described a text retrieval system configured to use an embedding model that is pretrained on generic selection of text, but that can be specifically trained for specific text retrieval tasks. The text retrieval system includes a query embedding transformation model that is trained to transform a baseline query embedding generated by the embedding model into a modified query embedding based on a distance between the baseline query embedding and training query embeddings. The query embedding transformation model is configured so that as the distance between baseline query embeddings and the training query embedding decreases, the resulting modified query embeddings are less distant to the training text embedding. A searcher performs a nearest neighbor searches of a text embedding index using the modified query embeddings to determine the nearest matching text(s), which include the training texts, and retrieves the nearest matching texts from a corpus.

Further examples of feature combinations taught by the present disclosure are set out in the following numbered clauses.

Clause 1. A server computer configured for embedding based text retrieval, comprising: one or more processors; one or more databases communicatively coupled with the one or more processors; and a memory communicatively coupled with the one or more processors and storing instructions that, when executed by the one or more processors, causes the one or more processors to be configured as: an encoder comprising an embedding model that converts text from a corpus into corpus text embeddings that are stored as text embeddings in a text embedding index in the one or more databases, and converts text from queries into baseline query embeddings; a query embedding transformation model that transforms the baseline query embeddings from the embedding model into modified query embeddings, the query embedding transformation model is trained based on a labeled retrieval dataset comprising training queries and corresponding training texts, wherein the training queries are converted by the embedding model to training query embeddings that are stored in a training query embedding index in the one or more databases, and wherein the training texts are added to the corpus and are converted into training text embeddings by the embedding model and are stored as the text embeddings in the text embedding index in the one or more databases, the query embedding transformation model is trained to transform the baseline query embeddings into the modified query embeddings based on a distance between the baseline query embeddings and the training query embeddings; and a searcher that is configured to perform a nearest neighbor search that searches the text embedding index based on the modified query embeddings to produce one or more texts from the corpus.

Clause 2. The server computer of clause 1, wherein the text embeddings, the baseline query embeddings, and the modified query embeddings are numeric vectors of a same fixed dimension.

Clause 3. The server computer of clause 1 or 2, wherein the searcher searches the text embedding index based on a distance between the modified query embeddings and the text embeddings in the text embedding index.

Clause 4. The server computer of clause 1, 2 or 3, wherein the distance is determined based on at least one of a cosine distance, a Euclidean distance, a squared Euclidean distance, a vector dot product, a Manhattan distance, and a Hamming distance.

Clause 5. The server computer of any preceding clause, wherein the query embedding transformation model is trained to transform the baseline query embeddings into the modified query embeddings based on the distance between the baseline query embeddings and the training query embeddings according to a set of parameters such that as the distance between the baseline query embeddings and the training query embeddings decreases, the modified query embeddings are less distant to the training text embeddings.

Clause 6. The server computer of any preceding clause, wherein the query embedding transformation model is trained to transform the baseline query embeddings with a set of parameters such that: an exact match between a baseline query embedding and a training query embedding results in a modified query embedding that is the training text embedding; and as the distance between a baseline query embedding and a training query embedding approaches infinity, the modified query embedding is less distant to the baseline query embedding.

Clause 7. The server computer of any preceding clause, wherein the query embedding transformation model is trained to transform the baseline query embeddings according to parameters such that: an exact match between a baseline query embedding and a training query embedding results in a modified query embedding that is the training text embedding; a distance between a baseline query embedding and a training query embedding that is greater than a threshold results in a modified query embedding that is the baseline query embedding; and a distance between a baseline query embedding and a training query embedding that is less than a threshold results in a modified query embedding that is the training text embedding.

Clause 8. The server computer of any preceding clause, wherein the query embedding transformation model is a parameterized interpolation model with parameters trained on the labeled retrieval dataset.

Clause 9. The server computer of any preceding clause, wherein the query embedding transformation model is a parameterized multivariate Gaussian process model with parameters trained on the labeled retrieval dataset.

Clause 10. The server computer of any preceding clause, wherein the one or more processors are further configured to: receive a user query via an electronic interface; encode the user query into a baseline query embedding with the embedding model; transform the baseline query embedding to a modified query embedding based on the distance between the baseline query embedding and the training query embeddings; retrieve one or more texts from the corpus based on a nearest neighbor search of the text embedding index using the modified query embedding; and provide the one or more texts and the user query to a prompt constructor for a Large Language Model (LLM) in a Retrieval Augmented Generation application that produces a prompt to the LLM that integrates the one or more texts and the user query.

Clause 11. A method for training a text retrieval system for embedding based retrieval of text, comprising: encoding text from a corpus into corpus text embeddings with an embedding model that is pretrained, wherein the embedding model converts text from user queries into baseline query embeddings; receiving a labeled retrieval dataset comprising training queries and corresponding training texts, wherein the training texts are added in the corpus; encoding the training queries into training query embeddings and the training texts into training text embeddings; storing the training query embeddings in a training query embedding index; storing the corpus text embeddings and the training text embeddings as text embeddings in a text embedding index; and training a query embedding transformation model using the labeled retrieval dataset to transform the baseline query embeddings produced by the embedding model into modified query embeddings based on a distance between the baseline query embeddings and the training query embeddings.

Clause 12. The method of clause 11, wherein the text embeddings, the baseline query embeddings, and the modified query embeddings are numeric vectors of a same fixed dimension.

Clause 13. The method of clause 11 or 12, wherein a searcher in the text retrieval system searches the text embedding index based on the distance between the modified query embeddings and the text embeddings in the text embedding index.

Clause 14. The method of clause 11, 12 or 13, wherein the query embedding transformation model is trained to transform the baseline query embeddings into modified query embeddings based on a distance between the baseline query embeddings and the training query embeddings according to a set of parameters that as the distance between the baseline query embeddings and the training query embeddings decreases, the modified query embeddings are less distant to the training text embeddings.

Clause 15. The method of any of clauses 11 to 14, wherein the query embedding transformation model is trained to transform the baseline query embeddings according to a set of parameters such that: an exact match between a baseline query embedding and a training query embedding results in a modified query embedding that is the training text embedding; and as the distance between a baseline query embedding and a training query embedding approaches infinity, the modified query embedding is less distant to the baseline query embedding.

Clause 16. The method of any of clauses 11 to 15, wherein the query embedding transformation model is trained to transform the baseline query embeddings according to parameters such that: an exact match between a baseline query embedding and a training query embedding results in a modified query embedding that is the transformed query embedding; a distance between a baseline query embedding and a training query embedding that is greater than a threshold results in a modified query embedding that is the baseline query embedding; and a distance between a baseline query embedding and a training query embedding that is less than a threshold results in a modified query embedding that is the training text embedding.

Clause 17. The method of any of clauses 11 to 16, wherein the query embedding transformation model is trained using F-fold cross validation.

Clause 18. The method of any of clauses 11 to 17, wherein training the query embedding transformation model comprises minimizing a negative log marginal likelihood function.

Clause 19. The method of any of clauses 11 to 18, wherein training the query embedding transformation model comprises training a parameterized interpolation model with the labeled retrieval dataset.

Clause 20. The method of any of clauses 11 to 19, wherein training the query embedding transformation model comprises training a parameterized multivariate Gaussian process model with the labeled retrieval dataset.

Clause 21. A method for embedding based retrieval of text with a text retrieval system, comprising: receiving a user query via an electronic interface; encoding the user query into a baseline query embedding with an embedding model, wherein the embedding model encodes text from a corpus into corpus text embeddings and the corpus text embeddings are stored as text embeddings in a text embedding index; transforming the baseline query embedding to a modified query embedding with a query embedding transformation model, the query embedding transformation model is trained based on a labeled retrieval dataset comprising training queries and corresponding training texts, wherein the training queries are converted by the embedding model to training query embeddings that are stored in a training query embedding index, and wherein the training texts are added to the corpus and are converted into training text embeddings by the embedding model and are stored as the text embeddings in the text embedding index, the query embedding transformation model transforms the baseline query embeddings into the modified query embeddings based on a distance between the baseline query embeddings and the training query embeddings; retrieving one or more texts from the corpus based on a nearest neighbor search of the text embeddings in the text embedding index using the modified query embedding; and providing the one or more texts and the user query to a prompt constructor for a Large Language Model (LLM) in a Retrieval Augmented Generation application that produces a prompt to the LLM that integrates the one or more texts and the user query.

Clause 22. The method of clause 21, wherein the query embedding transformation model is trained to transform the baseline query embedding into the modified query embedding based on the distance between the baseline query embedding and the training query embedding according to a set of parameters that as the distance between baseline query embeddings and a training query embedding decreases, the modified query embeddings are less distant to the training text embedding.

Clause 23. The method of clause 21 or 22, wherein the query embedding transformation model is trained to transform the baseline query embedding with a set of parameters such that: an exact match between the baseline query embedding and a training query embedding results in the modified query embedding that is the training text embedding; and as the distance between the baseline query embedding and a training query embedding approaches infinity, the modified query embedding is less distant to the baseline query embedding.

Clause 24. The method of clause 21, 22 or 23, wherein the query embedding transformation model is trained to transform the baseline query embedding according to parameters such that: an exact match between the baseline query embedding and a training query embedding results in the modified query embedding that is the training text embedding; a distance between the baseline query embedding and a training query embedding that is greater than a threshold results in the modified query embedding that is the baseline query embedding; and a distance between the baseline query embedding and a training query embedding that is less than a threshold results in the modified query embedding that is the training text embedding.

Clause 25. The method of any of clauses 21 to 24, wherein the query embedding transformation model is a parameterized interpolation model with parameters trained on the labeled retrieval dataset.

Clause 26. The method of any of clauses 21 to 25, wherein the query embedding transformation model is a parameterized multivariate Gaussian process model with parameters trained on the labeled retrieval dataset.

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein but are to be accorded the broadest scope consistent with this disclosure, the principles and the novel features disclosed herein.

**Claims**

1. A server computer configured for embedding based text retrieval, comprising:

   one or more processors;
   one or more databases communicatively coupled with the one or more processors; and
   a memory communicatively coupled with the one or more processors and storing instructions that, when executed by the one or more processors, causes the one or more processors to be configured as:

   an encoder comprising an embedding model that converts text from a corpus into corpus text embeddings that are stored as text embeddings in a text embedding index in the one or more databases, and converts text from queries into baseline query embeddings;
   a query embedding transformation model that transforms the baseline query embeddings from the embedding model into modified query embeddings, the query embedding transformation model is trained based on a labeled retrieval dataset comprising training queries and corresponding training texts, wherein the training queries are converted by the embedding model to training query embeddings that are stored in a training query embedding index in the one or more databases, and wherein the training texts are added to the corpus and are converted into training text embeddings by the embedding model and are stored as the text embeddings in the text embedding index in the one or more databases, the query embedding transformation model is trained to transform the baseline query embeddings into the modified query embeddings based on a distance between the baseline query embeddings and the training query embeddings; and
   a searcher that is configured to perform a nearest neighbor search that searches the text embedding index based on the modified query embeddings to produce one or more texts from the corpus.

2. The server computer of claim 1, wherein the text embeddings, the baseline query embeddings, and the modified query embeddings are numeric vectors of a same fixed dimension.

3. The server computer of claim 1 or 2, wherein the searcher searches the text embedding index based on a distance between the modified query embeddings and the text embeddings in the text embedding index.

4. The server computer of claim 1, 2 or 3, wherein the distance is determined based on at least one of a cosine distance, a Euclidean distance, a squared Euclidean distance, a vector dot product, a Manhattan distance, and a Hamming distance.

5. The server computer of any preceding claim, wherein the query embedding transformation model is trained to transform the baseline query embeddings into the modified query embeddings based on the distance between the baseline query embeddings and the training query embeddings according to a set of parameters such that as the distance between the baseline query embeddings and the training query embeddings decreases, the modified query embeddings are less distant to the training text embeddings.

6. The server computer of any preceding claim, wherein the query embedding transformation model is trained to transform the baseline query embeddings with a set of parameters such that:

an exact match between a baseline query embedding and a training query embedding results in a modified query embedding that is the training text embedding; and
as the distance between a baseline query embedding and a training query embedding approaches infinity, the modified query embedding is less distant to the baseline query embedding.

7. The server computer of any of claims 1 to 5, wherein the query embedding transformation model is trained to transform the baseline query embeddings according to parameters such that:

an exact match between a baseline query embedding and a training query embedding results in a modified query embedding that is the training text embedding;
a distance between a baseline query embedding and a training query embedding that is greater than a threshold results in a modified query embedding that is the baseline query embedding; and
a distance between a baseline query embedding and a training query embedding that is less than a threshold results in a modified query embedding that is the training text embedding.

8. The server computer of any preceding claim, wherein the query embedding transformation model is one or more selected from the group comprising: a parameterized interpolation model with parameters trained on the labeled retrieval dataset; and a parameterized multivariate Gaussian process model with parameters trained on the labeled retrieval dataset.

9. The server computer of any preceding claim, wherein the one or more processors are further configured to:

receive a user query via an electronic interface;
encode the user query into a baseline query embedding with the embedding model;
transform the baseline query embedding to a modified query embedding based on the distance between the baseline query embedding and the training query embeddings;
retrieve one or more texts from the corpus based on a nearest neighbor search of the text embedding index using the modified query embedding; and
provide the one or more texts and the user query to a prompt constructor for a Large Language Model (LLM) in a Retrieval Augmented Generation application that produces a prompt to the LLM that integrates the one or more texts and the user query.

10. A method for training a text retrieval system for embedding based retrieval of text, comprising:

encoding text from a corpus into corpus text embeddings with an embedding model that is pretrained, wherein the embedding model converts text from user queries into baseline query embeddings;
receiving a labeled retrieval dataset comprising training queries and corresponding training texts, wherein the training texts are added in the corpus;
encoding the training queries into training query embeddings and the training texts into training text embeddings;
storing the training query embeddings in a training query embedding index;
storing the corpus text embeddings and the training text embeddings as text embeddings in a text embedding index; and
training a query embedding transformation model using the labeled retrieval dataset to transform the baseline query embeddings produced by the embedding model into modified query embeddings based on a distance between the baseline query embeddings and the training query embeddings.

11. The method of claim 10, wherein the query embedding transformation model is trained using F-fold cross validation.

12. The method of claim 10 or 11, wherein training the query embedding transformation model comprises one or more selected from the group comprising: minimizing a negative log marginal likelihood function; and training a parameterized interpolation model with the labeled retrieval dataset.

**13.** A method for embedding based retrieval of text with a text retrieval system, comprising:

receiving a user query via an electronic interface;

encoding the user query into a baseline query embedding with an embedding model, wherein the embedding model encodes text from a corpus into corpus text embeddings and the corpus text embeddings are stored as text embeddings in a text embedding index;

transforming the baseline query embedding to a modified query embedding with a query embedding transformation model, the query embedding transformation model is trained based on a labeled retrieval dataset comprising training queries and corresponding training texts, wherein the training queries are converted by the embedding model to training query embeddings that are stored in a training query embedding index, and wherein the training texts are added to the corpus and are converted into training text embeddings by the embedding model and are stored as the text embeddings in the text embedding index, the query embedding transformation model transforms the baseline query embeddings into the modified query embeddings based on a distance between the baseline query embeddings and the training query embeddings;

retrieving one or more texts from the corpus based on a nearest neighbor search of the text embeddings in the text embedding index using the modified query embedding; and

providing the one or more texts and the user query to a prompt constructor for a Large Language Model (LLM) in a Retrieval Augmented Generation application that produces a prompt to the LLM that integrates the one or more texts and the user query.

**14.** The method of any of claims 10 to 13, further comprising steps corresponding to the functionality of any of claims 2 to 9.

**15.** A computer-readable medium comprising instructions which, when executed by one or more processors, cause one or more processors to carry out the method of any of claims 10 to 14.

FIG. 1

**FIG. 2**

320 — Corpus

Prompt Parameters — 370

350

300

302

User Query → Retriever → Ordered Text → Prompt Constructor → LLM Prompt → LLM → Output

310

360

380

FIG. 3

EP 4 718 279 A1

400

410 Retriever

Text Embedding Index
$M(C) = \{(m(d),d):d \in C\}$

420 Corpus
$C=\{d\}$

412a 412 Encoder

Embedding
$m(d)$

414

Embedding
Model
$m(\bullet)$

402

Text Query
$q$

Embedding
$m(q)$

416 Searcher
$f(m(q);K, C)$

Ordered Text
$\{d_1(q), d_2(q), \ldots, d_K(q)\} \subset C$

FIG. 4

26

FIG. 5

**600**

**602**

Encode text from a corpus into corpus text embeddings with an embedding model that is pretrained, wherein the embedding model converts text from user queries into baseline query embeddings

**604**

Receive a labeled retrieval dataset comprising training queries and corresponding training texts, wherein the training texts are added in the corpus

**606**

Encode the training queries into training query embeddings and the training texts into training text embeddings

**608**

Store the training query embeddings in a training query embedding index

**610**

Store the corpus text embeddings and the training text embeddings as text embeddings in a text embedding index

**612**

Train a query embedding transformation model using the labeled retrieval dataset to transform the baseline query embeddings produced by the embedding model into modified query embeddings based on a distance between the baseline query embeddings and the training query embeddings

# FIG. 6

**700**

**702**

Receive a user query via an electronic interface

**704**

Encode the user query into a baseline query embedding with an embedding model, wherein the embedding model encodes text from a corpus into corpus text embeddings and the corpus text embeddings are stored as text embeddings in a text embedding index

**706**

Transform the baseline query embedding to a modified query embedding with a query embedding transformation model, the query embedding transformation model is trained based on a labeled retrieval dataset comprising training queries and corresponding training texts, wherein the training queries are converted by the embedding model to training query embeddings that are stored in a training query embedding index, and wherein the training texts are added to the corpus and are converted into training text embeddings by the embedding model and are stored the text embeddings in the text embedding index, the query embedding transformation model transforms the baseline query embeddings into the modified query embeddings based on a distance between the baseline query embeddings and the training query embeddings

**708**

Retrieve one or more texts from the corpus based on a nearest neighbor search of the text embeddings in the text embedding index using the modified query embedding

**710**

Provide the one or more texts and the user query to a prompt constructor for a Large Language Model (LLM) in a Retrieval Augmented Generation application that produces a prompt to the LLM that integrates the one or more texts and the user query

FIG. 7

Europäisches
Patentamt
European
Patent Office
Office européen
des brevets

## EUROPEAN SEARCH REPORT

**Application Number**

EP 25 19 2887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIHANG ZHENG ET AL: "Revolutionizing Database Q&A with Large Language Models: Comprehensive Benchmark and Evaluation", ARXIV.ORG, CORNELL UNIVERSITY LIBRARY, 201 OLIN LIBRARY CORNELL UNIVERSITY ITHACA, NY 14853, 5 September 2024 (2024-09-05), XP091877914, * abstract; figure 4 * * page 7, paragraph 4.3 - paragraph 4.4 * ----- | 1-15 | INV. G06F16/334 |
| A | YOGESH KUMAR ET AL: "Improving Medical Multi-modal Contrastive Learning with Expert Annotations", ARXIV.ORG, CORNELL UNIVERSITY LIBRARY, 201 OLIN LIBRARY CORNELL UNIVERSITY ITHACA, NY 14853, 10 July 2024 (2024-07-10), XP091817350, * abstract; figure 2 * * page 11, paragraph 4.4 - page 12 * ----- | 1-15 | |

**TECHNICAL FIELDS
SEARCHED (IPC)**

G06F

The present search report has been drawn up for all claims

| Place of search | Date of completion of the search | Examiner |
|---|---|---|
| Berlin | 13 November 2025 | Nazzaro, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- US 90265224